# EUROPÄISCHE PATENTSCHRIFT

(11) **EP 3 153 610 B1**
(45) Veröffentlichungstag und Bekanntmachung des Hinweises auf die Patenterteilung: **05.05.2021**
(21) Anmeldenummer: 16190844.7
(22) Anmeldetag: 27.09.2016
(51) Int. Cl.: D01H 1/32, D02J 1/22, H02P 3/22, H02P 6/182, H02P 6/18

(54) **ANSTEUEREINRICHTUNG**
CONTROL DEVICE
DISPOSITIF DE COMMANDE

(30) Priorität: 05.10.2015 EP 15188412
(43) Veröffentlichungstag der Anmeldung: 12.04.2017
(73) Patentinhaber: Hanning Elektro-Werke GmbH & Co. KG, 33813 Oerlinghausen (DE); Oerlikon Textile GmbH & Co. KG, 42897 Remscheid (DE)
(72) Erfinder: Neumann, Richard, 32805 Horn-Bad Meinberg (DE); Buchalla, Harald, 59494 Soest (DE); Ströwer, Jürgen, 58730 Fröndenberg (DE); Schmidt, Uwe, 51688 Wipperfürth (DE)
(74) Vertreter: Wickord, Wiro

(56) Entgegenhaltungen:
- EP-A1- 1 771 369
- WO-A1-2015/046000
- WO-A1-2015/059142
- US-A- 4 970 445
- US-A1- 2001 019 249
- US-A1- 2003 234 629

## Beschreibung

Die Erfindung betrifft eine Ansteuereinrichtung für eine Textilmaschinen-Antriebsanordnung umfassend wenigstens einen Antriebsstrang mit einer Mehrzahl von Antrieben und mit einem Steuermodul zum Betreiben der Antriebe, wobei jeder Antrieb einen Elektromotor mit einer Mehrzahl von Motorwicklungsleitungen, einen als Stellglied für den Antrieb wirkenden Wechselrichter und einen dem Elektromotor zugeordneten Kontroller zum Ansteuern des Elektromotors aufweist, und umfassend eine Maschinensteuereinheit, welche mit dem Steuermodul des wenigstens einen Antriebsstrangs datentechnisch verbunden ist, wobei wenigstens eine erste Datenbusleitung vorgesehen ist zum Verbinden der Maschinensteuereinheit mit dem Steuermodul und wobei der wenigstens eine Antriebsstrang eine weitere Datenbusleitung aufweist, über die das Steuermodul des Antriebsstrangs mit den Kontrollern der Antriebe datentechnisch verbunden ist.

Eine Antriebsanordnung für eine Textilmaschine verfügt üblicherweise über eine Mehrzahl von Antriebssträngen, welche jeweils eine Mehrzahl von Antrieben und ein Steuermodul zum Betätigen der Antriebe vorsehen. Zusätzlich ist eine Maschinensteuereinheit vorgesehen, welche datentechnisch mit den Steuermodulen der verschiedenen Antriebsstränge zusammenwirkt. Die datentechnische Verbindung ist in der Regel über eine Datenbusleitung realisiert. Die Bearbeitung eines Textils erfolgt antriebsstrangübergreifend, indem Antriebe gemeinsam auf das Textil einwirken. Beispielsweise wirken die ersten Antriebe der Antriebsstränge gemeinsam auf ein erstes Textil ein. In analoger Weise wirken die zweiten Antriebe der Antriebsstränge auf ein zweites Textil ein. Insgesamt wird so in der Textilmaschine eine zu der Anzahl der Antriebe je Antriebsstrang korrespondierende Anzahl von Textilien parallel und gleichzeitig bearbeitet.

Um die Textilien nunmehr unabhängig voneinander bearbeiten zu können, müssen die Antriebe antriebsstrangübergreifend und unabhängig angesteuert und insbesondere individuell in Betrieb genommen beziehungsweise gestoppt werden. Zusätzlich müssen die Antriebe zur Kodierung ihrer Einbauposition in dem jeweiligen Antriebsstrang und zur Zuordnung zu den verschiedenen Antriebssträngen einzeln identifiziert beziehungsweise kenntlich gemacht werden. Jeweils erfolgt dies über typischerweise mechanisch ausgebildete Bedienelemente, welche für jeden einzelnen Antrieb vorzusehen sind. Durch das Vorsehen der Vielzahl von Bedienelementen sind die Antriebsanordnung und die zugeordnete Ansteuereinrichtung entsprechend aufwendig und teuer.

Aus der WO 2015/059142 A1 ist ein Verfahren für die Inbetriebnahme von Galettenantrieben einer Texturiermaschine nach einem Maschinenstillstand bekannt, bei dem die Antriebe manuell durch einen Nutzer angedreht werden. Aus der EP 1 771 369 A1 ist darüber hinaus ein Ansteuerungsverfahren für einen Linearmotor bekannt.

Aufgabe der vorliegenden Erfindung ist es insofern, eine besonders kostengünstige und flexibel verwendbare Ansteuereinrichtung für eine Textilmaschinen-Antriebsanordnung anzugeben.

Zur Lösung der Aufgabe ist die Erfindung in Verbindung mit dem Oberbegriff des Patentanspruchs 1 dadurch gekennzeichnet, dass den Motorwicklungsleitungen eines jeden Antriebs eine Detektoranordnung zugeordnet ist, welche ausgebildet ist zum Detektieren und Auswerten einer Drehrichtung und eines Drehwinkels eines Rotors des Elektromotors, dass den Motorwicklungsleitungen weiterhin eine den Wechselrichter umfassende Ansteuerschaltung zugeordnet ist, welche ausgebildet ist zum wahlweisen Antreiben des Elektromotors und zum Aufprägen eines der Rotation des Elektromotors entgegenwirkenden Haltemoments im Stillstand und dass der Kontroller des Elektromotors und/oder das Steuermodul der Antriebsstränge und/oder die übergeordnete Maschinensteuereinheit ausgebildet ist zum Zusammenwirken mit der Detektoranordnung und der Ansteuerschaltung derart, dass in Abhängigkeit der Drehrichtung und des Drehwinkels eine lokale Rotationsschwergängigkeit auftritt derart, dass innerhalb einer Wellenumdrehung schwergängige und leichtgängige Winkelbereiche ausgebildet sind.

Der besondere Vorteil der Erfindung besteht darin, dass bei der erfindungsgemäßen Ansteuereinrichtung auf Bedienelemente verzichtet werden kann oder dass die Anzahl an Bedienelementen reduziert werden kann. Es können insofern Kosten eingespart werden. Die Ansteuereinrichtung kann insbesondere mit in Asynchronbeziehungsweise Synchronbauweise realisierten Elektromotoren zur Anwendung kommen.

Anstelle der Bedienelemente werden die Antriebe selbst als Eingabemittel verwendet. Es ist hierbei so, dass ein Benutzer über die Welle des Elektromotors oder einen an der Welle festgelegten Rotationskörper (Galette) aus dem stehenden Zustand heraus eine Rotationsbewegung aufprägt. Die Rotationsbewegung wird mit den in Bezug auf die Drehrichtung und den Drehwinkel von der Detektoranordnung der Ansteuereinrichtung ausgewertet. Überdies dient die Ansteuerschaltung der Ansteuereinrichtung dazu, die Rotation der Welle beziehungsweise des Rotors haptisch wahrnehmbar zu gestalten. Es ist insofern vorgesehen innerhalb einer Wellenumdrehung schwergängige und leichtgängige Winkelbereiche abzubilden, welche vom Benutzer als Rastung wahrgenommen werden. Nach einem zuvor festgelegten Schema können insofern Informationen über die Einbauposition des Antriebs oder Hinweise für die Inbetriebnahme oder die Betriebsparameter des Antriebs vom Benutzer eingegeben werden. Beispielsweise kennzeichnet eine Drehung des Rotors um eine Rastung im Uhrzeigersinn eine erste Rangposition innerhalb eines Antriebsstrangs. In analoger Weise wird durch eine Drehbewegung um zwei Rastungen im Uhrzeigersinn eine zweite Rangnummer in dem Antriebsstrang kenntlich gemacht und so weiter. Beispielsweise kann durch eine Drehung des Rotors um zwei Rastungen im Gegenuhrzeigersinn der Antrieb eingeschaltet werden. Auf separate Bedienelemente kann insofern verzichtet werden.

In analoger Weise kann über andere zuvor festgelegte Eingaberoutinen zwischen den unterschiedlichen Antriebssträngen unterschieden oder ein Betriebsparameter für den Antrieb beispielsweise in Bezug auf eine Antriebsdrehzahl festgelegt werden. Es kann nach der Erfindung beispielsweise vorgesehen werden, dass ausschließlich die Einbaupositionen des Antriebs über die erfindungsgemäße Ansteuereinrichtung bestimmt wird, wohingegen zum Einschalten oder Ausschalten der Antriebe ein dezidiertes Bedienelement vorgesehen ist oder die Antriebe über ein aufseiten der Maschinensteuereinheit oder des Steuermoduls generiertes Schaltsignal in Betrieb genommen oder ausgeschaltet werden.

Allgemein gilt, dass mittels der Ansteuerschaltung an dem Elektromotor ein Magnetfeld erzeugt wird, welches einer Rotation des Elektromotors beziehungsweise einer Welle und dem daran gehaltenen Rotor jedenfalls im Stillstand als Haltmoment entgegenwirkt.

Beispielsweise kann die Ansteuerschaltung nach Art einer Kurzschlussschaltung realisiert sein. Zum gezielten Kurzschließen der vorzugsweise drei Motorwicklungsleitungen sieht die Kurzschlussschaltung üblicherweise eine Mehrzahl von Schaltelementen vor, welche über eine Steuerleitung mit dem Kontroller des Antriebs, dem Steuermodul des Antriebsstrangs beziehungsweise der Maschinensteuereinheit verbunden sind und von diesen betätigt werden. Beispielsweise sind Transistoren als Schaltelemente vorgesehen. Insbesondere kann vorgesehen sein, dass wenigstens sechs Schaltelemente so verbaut werden, dass jeder Motorwicklungsleitung zwei Schaltelemente zugeordnet sind. Die Realisierung der Ansteuerschaltung als Kurzschlussschaltung ist dabei insbesondere für Synchronmotoren vorgesehen. Die Synchronmotoren können beispielsweise als Permanentmagnet-Synchronmotoren oder als bürstenlose Gleichstrommotoren realisiert sein.

Die Detektoranordnung der Ansteuereinrichtung kann beispielsweise nach Art einer Detektorschaltung realisiert sein. Die Detektorschaltung umfasst jedenfalls zwei und beispielsweise drei Sensorleitungen, welche zwischen zwei beziehungsweise drei Motorwicklungsleitungen vorgesehen sind und jeweils ein Stromsperrelement vorsehen. Das Stromsperrelement ist beispielsweise nach Art einer Diode ausgebildet. In Reihe zu den Stromsperrelement ist eine Mehrzahl von ebenfalls in Reihe geschalteten Widerständen vorgesehen. Bevorzugt werden in jeder Sensorleitung zwei Widerstände in Reihe zu dem Stromsperrelement verschaltet. Zwischen zwei der gleichen Sensorleitung zugeordneten Widerständen ist dann ein Signalabgriff realisiert, von dem eine Signalleitung zu dem Kontroller des Elektromotors geführt ist. Insbesondere wird die Signalleitung zu einem Eingang eines Analog-Digital-Wandlers des Kontrollers geführt, sodass das Signal über die Drehrichtung und dem Drehwinkel bestimmt und in digitalisierter Form vom Kontroller verarbeitet werden kann.

Beispielsweise kann die Detektoranordnung ausgebildet sein zur Messung und Auswertung der Motorströme in den Motorwicklungsleitungen. Es kann hierbei insbesondere bei einem dauerhaften Kurzschluss der Motorwicklungsleitungen die Drehrichtung bestimmt werden.

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. Die Zeichnungen dienen lediglich beispielhaft der Klarstellung der Erfindung und haben keinen einschränkenden Charakter.

### Es zeigen:

- Fig. 1: eine Prinzipdarstellung einer Antriebsanordnung für eine Textilmaschine,
- Fig. 2: einen Antriebsstrang der Antriebsanordnung nach Fig. 1 mit einem Steuermodul und einer Mehrzahl von in Reihe verschalteten Antrieben, die jeweils einen Kontroller und einen von dem Kontroller angesteuerten Elektromotor umfassen, und
- Fig. 3: eine Prinzipdarstellung einer Detektorschaltung und einer Kurzschlussschaltung der erfindungsgemäßen Ansteuereinrichtung.

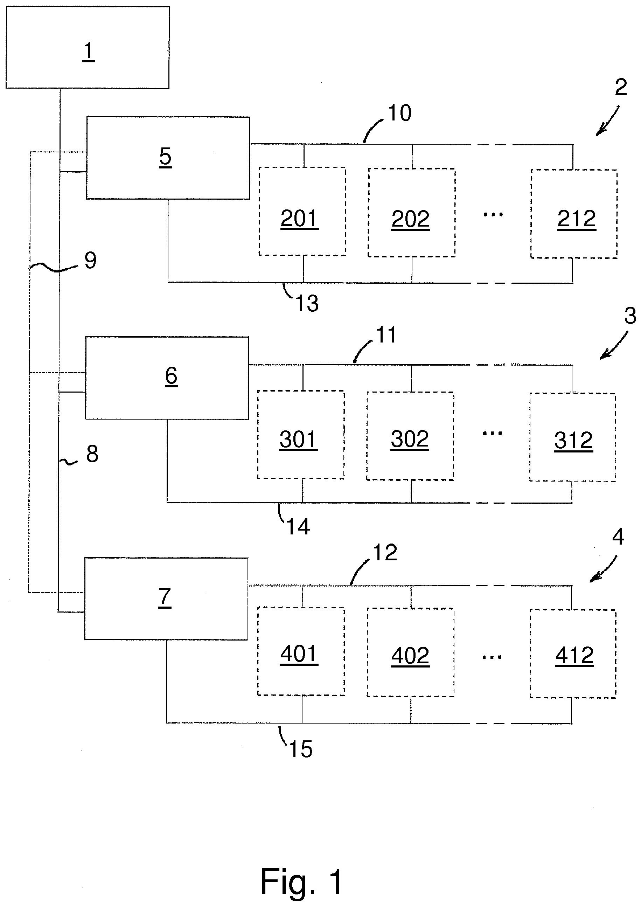

Eine Textilmaschinen-Antriebsanordnung nach Fig. 1 umfasste eine Maschinensteuereinheit 1 und eine Mehrzahl von Antriebssträngen 2, 3, 4. Die Antriebsstränge 2, 3, 4 weisen exemplarisch jeweils zwölf Antriebe 201, 202, 212, 301, 302, 312, 401, 402, 412 auf. Allein aus Gründen der Klarheit und Übersichtlichkeit sind für jeden Antriebsstrang 2, 3, 4 lediglich ein erster Antrieb 201, 301, 401, ein zweiter Antrieb 202, 302, 402 und ein zwölfter Antrieb 212, 312, 412 dargestellt. Zusätzlich sieht jeder Antriebsstrang 2, 3, 4 ein Steuermodul 5, 6, 7 auf, welches mit den Antrieben 201, 202, 212, 301, 302, 312, 401, 402, 412 des jeweiligen Antriebsstrangs 2, 3, 4 zusammenwirkt und dazu dient, die Antriebe 201, 202, 212, 301, 302, 312, 401, 402, 412 zu betreiben.

Die Steuermodul 5, 6, 7 sind über eine erste Datenbusleitung 8 datentechnisch mit der Maschinensteuereinheit 1 verbunden. Zusätzlich ist eine zweite Datenbusleitung 9 zwischen den Steuermodulen 5, 6, 7 vorgesehen. Während die erste Datenbusleitung 8 der Kommunikation von der Maschinensteuereinheit 1 zu den Steuermodulen 5, 6, 7 und zurück dient, dient die zweite Datenbusleitung 9 insbesondere der Kommunikation zwischen den verschiedenen Steuermodulen 5, 6, 7.

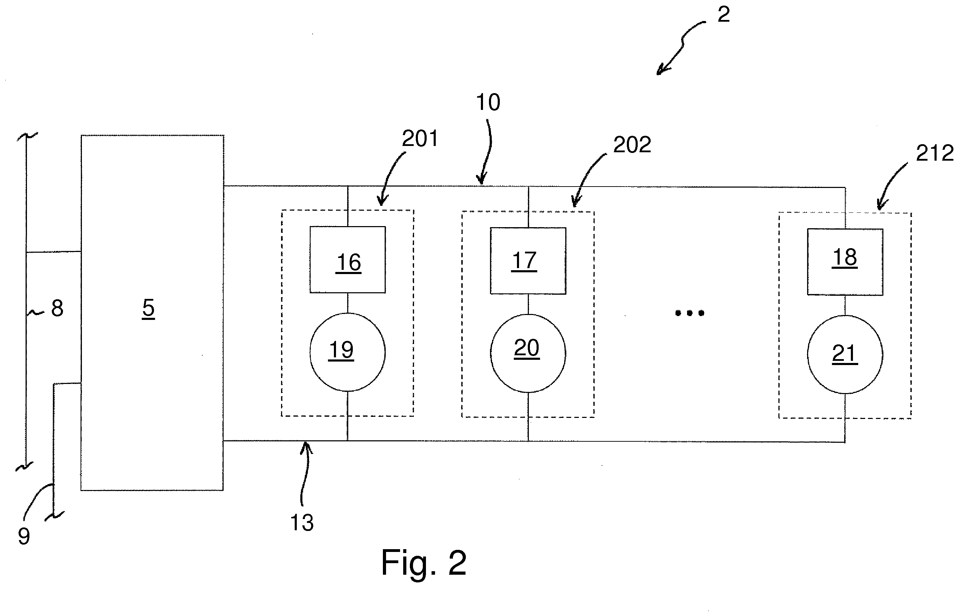

Innerhalb der Antriebsstränge 2, 3, 4 sind die Steuermodule 5, 6, 7 jeweils über eine weitere Datenbusleitung 10, 11, 12 mit den Antrieben 201, 202, 212, 301, 302, 312, 401, 402, 412 des jeweiligen Antriebsstrangs 2, 3, 4 datentechnisch verbunden. Darüber hinaus ist für jeden Antriebsstrang 2, 3, 4 eine elektrische Versorgungsleitung 13, 14, 15 vorgesehen, welche die Antriebe 201, 202, 212, 301, 302, 312, 401, 402, 412 von dem zugeordneten Steuermodulen 5, 6, 7 mit Energie versorgt werden. Fig. 2 zeigt exemplarisch für den ersten Antriebsstrang 2, dass jeder Antrieb 201, 202, 212 einen Elektromotor 19, 20, 21 sowie einen dem Elektromotor 19, 20, 21 zugeordneten Kontroller 16, 17, 18 aufweist. Als Elektromotor ist beispielsweise ein Asynchron- und Synchronmotor vorgesehen. Insbesondere kann vorgesehen sein, denn Synchronmotor nach Art eines Permanentmagnet-Synchronmotors oder eines bürstenlosen Gleichstrommotors auszubilden.

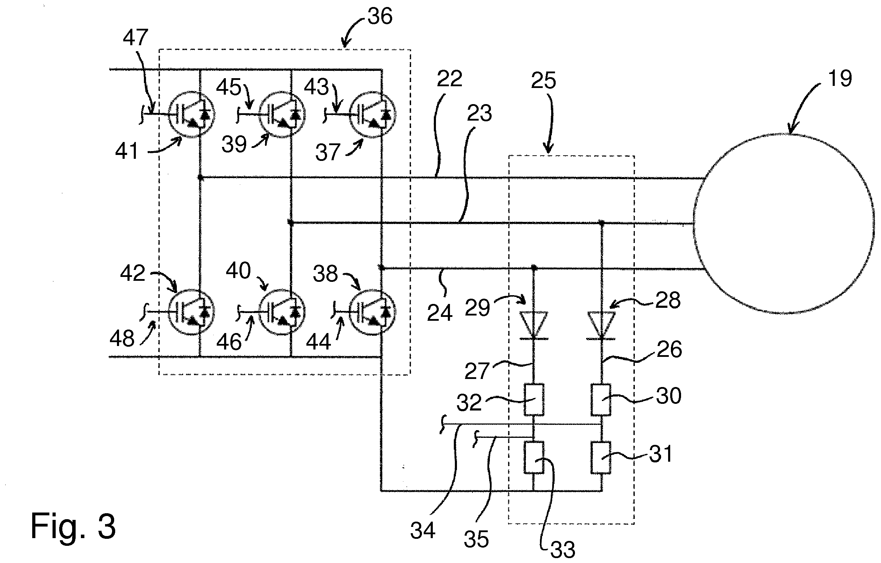

Die erfindungsgemäße Ansteuereinrichtung umfasst die Maschinensteuereinheit 1 und die Steuermodule 5, 6, 7. Des Weiteren sind die den jeweiligen Antrieben 201, 202, 212, 301, 302, 312, 401, 402, 412 zugeordneten Steuerungskomponenten Teil der Ansteuereinrichtung. Fig. 3 zeigt exemplarisch für den Elektromotor 19 des ersten Antriebs 201 des ersten Antriebsstrangs 2 als Teil der erfindungsgemäßen Ansteuereinrichtung realisierten Steuerungskomponenten. Es ist zum einen eine Detektorschaltung 25 und zum anderen eine Kurzschlussschaltung 36 vorgesehen. Jeweils wirken die Detektorschaltung 25 und die Kurzschlussschaltung 36 auf die insgesamt drei Motorwicklungsleitungen 22, 23, 24 des Elektromotors 19. Dabei sieht die Detektorschaltung 25 zwei Sensorleitungen 26, 27 vor. Die Sensorleitungen 26, 27 sind zueinander parallel zwischen zwei Motorwicklungen 23, 24 vorgesehen. Jeweils umfassen die Sensorleitung 26, 27 eine Diode 28, 29 als Stromsperrelement und in Reihe hierzu verschaltet zwei Widerstände 30, 31, 32, 33. Zwischen dem ersten Widerstand 30 und dem zweiten Widerstand 31 der ersten Sensorleitung 26 ist ein erster Signalabgriff realisiert, von dem eine erste Signalleitung 34 zu einem Eingang eines Analog-Digital-Wandlers des Kontrollers 16 des ersten Antriebs 201 geführt ist. In analoger Weise sieht die zweite Sensorleitung 27 zwischen dem ersten Widerstand 32 und dem zweiten Widerstand 33 einen Signalabgriff vor, von dem eine zweite Signalleitung 35 zu dem Analog-Digital-Wandlers des Kontrollers 16 geführt ist. Über die Detektorschaltung 25 kann im Zusammenwirken der Dioden 28, 29 und der Widerstände 30, 31, 32, 33 eine Drehrichtung des Elektromotors 19 bestimmt und ein Drehwinkel des Elektromotors 19 betragsmäßig erfasst werden.

Die Kurzschlussschaltung 36 umfasst insgesamt sechs Transistoren 37, 38, 39, 40, 41, 42 als Schaltelemente. Die Transistoren sind paarweise den drei Motorwicklungen 22, 23, 24 so zugeordnet, dass einzelne oder alle Motorwicklungsleitungen 22, 23, 24 gezielt kurzgeschlossen werden können. Dabei verfügen die Transistoren über einen Steuereingang, der über eine Steuerleitung 43, 44, 45, 46, 47, 48 mit dem Kontroller 16 des ersten Antriebs 201 verbunden ist. Der Kontroller 16 steuert insofern die Schaltelemente 37, 38, 39, 40, 41, 42 und schließt je nach Schaltzustand die Motorwicklungsleitungen 22, 23, 24 kurz.

Im Zusammenwirken der Kurzschlussschaltung 36 mit der Detektorschaltung 25 erfolgt die Ansteuerung der Schaltelemente 37, 38, 39, 40, 41, 42 derart, dass temporär ein Kurzschluss für einzelne Motorwicklungsleitungen 22, 23, 24 als Funktion des Drehwinkels beziehungsweise der Drehrichtung des Elektromotors 19 hergestellt wird. Es wird somit steuerungstechnisch eine in Umfangsrichtung variable Drehrastung realisiert, welche von einem Benutzer bei der manuellen Aufprägung einer Drehbewegung auf die Welle beziehungsweise den Rotor des Elektromotors haptisch wahrgenommen wird und ihm eine Rückmeldung über den Drehwinkel beziehungsweise die Drehrichtung gibt. Der Signalfluss ist insofern so, dass über die Detektorschaltung ermittelte Informationen zur Rotorposition beziehungsweise zur Drehrichtung des Rotors erfasst und digitalisiert werden. Die digitalisierten Werte werden dann vom Kontroller 16 verarbeitet und zur Ansteuerung der Transistor 37, 38, 39, 40, 41, 42 der Kurzschlussschaltung 36 verwendet.

Nach einer alternativen, nicht dargestellten Ausführungsform der Erfindung kann vorgesehen sein, dass die Detektorschaltung 25 drei den Motorwicklungsleitungen 22, 23, 24 zugeordnete, zueinander parallele Sensorleitungen vorsieht. Jeweils sind die drei Sensorleitungen wie vorstehend beschrieben ausgebildet mit einer Diode als Stromsperrelement und einer Mehrzahl von hinzu in Reihe geschalteten Widerständen. Jeder Motorwicklungsleitung 22, 23, 24 ist hierbei eine Sensorleitung zugeordnet. Insgesamt werden von den zwischen den Widerständen gebildeten Signalabgriffen drei Sensorleitungen zum Eingang des Analog-Digital-Wandlers des Kontrollers 16 des jeweiligen Antriebs geführt.

Weiter kann vorgesehen sein, dass die Detektoranordnung Messmittel zum Erfassen der Drehrichtung des Elektromotors 19, 20, 21 vorsieht. Insbesondere werden hierbei die Motorströme in den Motorwicklungsleitungen 22, 23, 24 messtechnisch erfasst und ausgewertet. Dabei sind die Transistoren 37, 38, 39, 40, 41, 42 vorgesehen zum Kurzschließen der Motorwicklungsleitungen 22, 23, 24 im Stillstand des Elektromotors 19, 20, 21. Die Drehung der Welle des Elektromotors 19, 20, 21 ist hierbei von Beginn an gehemmt.

Gleiche Bauteile und Bauteilfunktionen sind durch gleiche Bezugszeichen gekennzeichnet.

## Patentansprüche

1. Ansteuereinrichtung für eine Textilmaschinen-Antriebsanordnung umfassend wenigstens einen Antriebsstrang (2, 3, 4) mit einer Mehrzahl von Antrieben (201, 202, 212, 301, 302, 312, 401, 402, 412) und mit einem Steuermodul (5, 6, 7) zum Betreiben der Antriebe (201, 202, 212, 301, 302, 312, 401, 402, 412), wobei jeder Antrieb (201, 202, 212, 301, 302, 312, 401, 402, 412) einen Elektromotor (19, 20, 21) mit einer Mehrzahl von Motorwicklungsleitungen (22, 23, 24), einen als Stellglied für den Antrieb (201, 202, 212, 301, 302, 312, 401, 402, 412) wirkenden Wechselrichter und einen dem Elektromotor (19, 20, 21) zugeordneten Kontroller (16, 17, 18) zum Ansteuern des Elektromotors (19, 20, 21) aufweist, und umfassend eine Maschinensteuereinheit (1), welche mit dem Steuermodul (5, 6, 7) des wenigstens einen Antriebsstrangs (2, 3, 4) datentechnisch verbunden ist, wobei wenigstens eine erste Datenbusleitung (8) vorgesehen ist zum Verbinden der Maschinensteuereinheit (1) mit dem Steuermodul (5, 6, 7) und wobei der wenigstens eine Antriebsstrang (2, 3, 4) eine weitere Datenbusleitung (10, 11, 12) aufweist, über die das Steuermodul (5, 6, 7) des Antriebsstrangs (2, 3, 4) mit den Kontrollern (16, 17, 18) der Antriebe (201, 202, 212, 301, 302, 312, 401, 402, 412) datentechnisch verbunden ist, **dadurch gekennzeichnet, dass** den Motorwicklungsleitungen (22, 23, 24) eines jeden Antriebs (201, 202, 212, 301, 302, 312, 401, 402, 412) eine Detektoranordnung (25) zugeordnet ist, welche ausgebildet ist zum Detektieren und Auswerten einer Drehrichtung und eines Drehwinkels eines Rotors des Elektromotors (19, 20, 21), dass den Motorwicklungsleitungen (22, 23, 24) weiterhin eine den Wechselrichter umfassende Ansteuerschaltung (36) zugeordnet ist, welche ausgebildet ist zum wahlweisen Antreiben des Elektromotors (19, 20, 21) und zum Aufprägen eines der Rotation des Elektromotors (19, 20, 21) entgegenwirkenden Haltemoments im Stillstand, und dass der Kontroller (16, 17, 18) des Elektromotors (19, 20, 21) und/oder das Steuermodul (5, 6, 7) der Antriebsstränge (2, 3, 4) und/oder die übergeordnete Maschinensteuereinheit (1) ausgebildet ist zum Zusammenwirken mit der Detektoranordnung (25) und der Ansteuerschaltung (36) derart, dass in Abhängigkeit der Drehrichtung und des Drehwinkels eine lokale Rotationsschwergängigkeit auftritt derart, dass innerhalb einer Wellenumdrehung schwergängige und leichtgängige Winkelbereiche ausgebildet sind.

2. Ansteuereinrichtung nach Anspruch 1, **dadurch gekennzeichnet, dass** die Ansteuerschaltung als eine Kurzschlussschaltung (36) ausgebildet ist derart, dass jedenfalls einzelne Motorwicklungsleitungen (22, 23, 24) wahlweise kurzschließbar sind, wobei die Kurzschlussschaltung (36) wenigstens ein Schaltelement umfasst, wobei das wenigstens eine Schaltelement bevorzugt als ein Transistor (37, 38, 39, 40, 41, 42) ausgebildet ist.

3. Ansteuereinrichtung nach Anspruch 2, **dadurch gekennzeichnet, dass** die Kurzschlussschaltung (36) wenigstens sechs Schaltelemente umfasst, wobei jeweils mindestens zwei Schaltelemente je Motorwicklungsleitung (22, 23, 24) vorgesehen sind.

4. Ansteuereinrichtung nach Anspruch 3, **dadurch gekennzeichnet, dass** die Schaltelemente einen Steuereingang vorsehen und dass eine Steuerleitung (43, 44, 45, 46, 47, 48) von dem Steuereingang des Schaltelements zu dem Kontroller (16, 17, 18) des Elektromotors (19, 20, 21) geführt ist.

5. Ansteuereinrichtung nach einem der Ansprüche 1 bis 4, **dadurch gekennzeichnet, dass** die Detektoranordnung ausgebildet ist als eine Detektorschaltung (25), wobei die Detektorschaltung (25) wenigstens zwei Sensorleitungen (26, 27) umfasst, welche zwischen mindestens zwei Motorwicklungsleitungen (22, 23, 24) vorgesehen sind und jeweils ein Stromsperrelement vorsehen, wobei das Stromsperrelement bevorzugt als Diode (28, 29) ausgebildet ist.

6. Ansteuereinrichtung nach Anspruch 5, **dadurch gekennzeichnet, dass** die wenigstens zwei Sensorleitungen (26, 27) jeweils eine Mehrzahl von in Reihe verschalteten Widerständen (30, 31, 32, 33) vorsehen, wobei bevorzugt zwei Widerstände (30, 31, 32, 33) je Sensorleitung (26, 27) in Reihe verschaltet sind.

7. Ansteuereinrichtung nach Anspruch 6, **dadurch gekennzeichnet, dass** als Teil der Detektorschaltung (25) ein Signalabgriff zwischen zwei benachbarten Widerständen (30, 31, 32, 33) einer Sensorleitung (26, 27) vorgesehen ist und dass von dem Signalabgriff eine Signalleitung (34, 35) zu dem Kontroller (16, 17, 18) des Elektromotors (19, 20, 21) geführt ist.

8. Ansteuereinrichtung nach Anspruch 7, **dadurch gekennzeichnet, dass** die Signalleitung (34, 35) zu einem Eingang eines Analog-Digital-Wandlers des Kontrollers (16, 17, 18) geführt ist.

9. Ansteuereinrichtung nach einem der Ansprüche 1 bis 8, **dadurch gekennzeichnet, dass** insgesamt drei Antriebsstränge (2, 3, 4) mit jeweils zwölf Antrieben (201, 202, 212, 301, 302, 312, 401, 402, 412) vorgesehen sind, wobei jeder Antriebsstrang (2, 3, 4) ein eigenes Steuermodul (5, 6, 7) und eine eigene weitere Datenbusleitung (10, 11, 12) zum Verbinden des Steuermoduls (5, 6, 7) des Antriebsstrangs (2, 3, 4) mit den zugeordneten Antrieben (201, 202, 212, 301, 302, 312, 401, 402, 412) des Antriebsstrangs (2, 3, 4) vorsieht.

10. Ansteuereinrichtung nach einem der Ansprüche 1 bis 9, **dadurch gekennzeichnet, dass** eine Mehrzahl von Steuermodulen (5, 6, 7) über eine zweite Datenbusleitung (9) datentechnisch miteinander verbunden sind, wobei die Maschinensteuereinheit (1) nicht an die zweite Datenbusleitung (9) angeschlossen ist.

## Claims

1. Actuation device for a textile machine drive arrangement comprising at least one drive train (2, 3, 4) having a plurality of drives (201, 202, 212, 301, 302, 312, 401, 402, 412) and having a control module (5, 6, 7) for operating the drives (201, 202, 212, 301, 302, 312, 401, 402, 412), each drive (201, 202, 212, 301, 302, 312, 401, 402, 412) having an electric motor (19, 20, 21) having a plurality of motor winding lines (22, 23, 24), an inverter acting as an actuation member for the drive (201, 202, 212, 301, 302, 312, 401, 402, 412), and a controller (16, 17, 18) assigned to the electric motor (19, 20, 21) for actuating the electric motor (19, 20, 21), and comprising a machine control unit (1) which is data-linked to the control module (5, 6, 7) of the at least one drive train (2, 3, 4), at least one first data bus line (8) being provided for connecting the machine control unit (1) to the control module (5, 6, 7) and the at least one drive train (2, 3, 4) having a further data bus line (10, 11, 12) via which the control module (5, 6, 7) of the drive train (2, 3, 4) is data-linked to the controllers (16, 17, 18) of the drives (201, 202, 212, 301, 302, 312, 401, 402, 412), **characterised in that** a detector arrangement (25) is assigned to the motor winding lines (22, 23, 24) of each drive (201, 202, 212, 301, 302, 312, 401, 402, 412) and is formed to detect and evaluate a direction of rotation and angle of rotation of a rotor of the electric motor (19, 20, 21), **in that** an actuation circuit (36) comprising the inverter is further assigned to the motor winding lines (22, 23, 24) and is formed for selectively driving the electric motor (19, 20, 21) and for applying a holding torque countering the rotation of the electric motor (19, 20, 21) in a stationary state, and **in that** the controller (16, 17, 18) of the electric motor (19, 20, 21) and/or the control module (5, 6, 7) of the drive trains (2, 3, 4) and/or the superordinate machine control unit (1) are formed to cooperate with the detector arrangement (25) and the actuation circuit (36) in such a way that a local rotational sluggishness occurs as a function of the direction of rotation and angle of rotation in such a way that smooth and sluggish angular ranges are formed within a shaft rotation.

2. Actuation device according to claim 1, **characterised in that** the actuation circuit is formed as a short circuit (36), in such a way that at least individual motor winding lines (22, 23, 24) are selectively short-circuitable, the short circuit (36) comprising at least one switching element, the at least one switching element preferably being formed as a transistor (37, 38, 39, 40, 41, 42).

3. Actuation device according to claim 2, **characterised in that** the short circuit (36) comprises at least six switching elements, at least two switching elements being provided for each motor winding line (22, 23, 24).

4. Actuation device according to claim 3, **characterised in that** the switching elements provide a control input and **in that** a control line (43, 44, 45, 46, 47, 48) is guided from the control input of the switching element to the controller (16, 17, 18) of the electric motor (19, 20, 21).

5. Actuation device according to any of claims 1 to 4, **characterised in that** the detector arrangement is formed as a detector circuit (25), the detector circuit (25) comprising at least two sensor lines (26, 27) which are provided between at least two motor winding lines (22, 23, 24) and each provide a current-blocking element, the current-blocking element preferably being formed as a diode (28, 29).

6. Actuating device according to claim 5, **characterised in that** the at least two sensor lines (26, 27) each provide a plurality of resistors (30, 31, 32, 33) connected in series, preferably two resistors (30, 31, 32, 33) being connected in series for each sensor line (26, 27).

7. Actuation device according to claim 6, **characterised in that** as part of the detector circuit (25) a signal pick-up is provided between two adjacent resistors (30, 31, 32, 33) of a sensor line (26, 27), and **in that** from the signal pick-up a signal line (34, 35) is guided to the controller (16, 17, 18) of the electric motor (19, 20, 21).

8. Actuation device according to claim 7, **characterised in that** the signal line (34, 35) is guided to an input of an analogue-digital converter of the controller (16, 17, 18).

9. Actuation device according to any of claims 1 to 8, **characterised in that** in total three drive trains (2, 3, 4) each comprising twelve drives (201, 202, 212, 301, 302, 312, 401, 402, 412) are provided, each drive train (2, 3, 4) providing a dedicated control module (5, 6, 7) and a dedicated further data bus line (10, 11, 12) for connecting the control module (5, 6, 7) of the drive train (2, 3, 4) to the assigned drives (201, 202, 212, 301, 302, 312, 401, 402, 412) of the drive train (2, 3, 4).

10. Actuation device according to any of claims 1 to 9, **characterised in that** a plurality of control modules (5, 6, 7) are data-linked to one another via a second data bus line (9), the machine control unit (1) not being connected to the second data bus line (9).

## Revendications

1. Dispositif d'attaque pour un ensemble d'entraînement de machine textile comprenant au moins une chaîne d'entraînement (2, 3, 4) comportant une pluralité d'entraînements (201, 202, 212, 301, 302, 312, 401, 402, 412) et un module de commande (5, 6, 7) pour faire fonctionner les entraînements (201, 202, 212, 301, 302, 312, 401, 402, 412), chaque entraînement (201, 202, 212, 301, 302, 312, 401, 402, 412) présentant un moteur électrique (19, 20, 21) avec une pluralité de lignes d'enroulement de moteur (22, 23, 24), un onduleur agissant comme actionneur pour l'entraînement (201, 202, 212, 301, 302, 312, 401, 402, 412) et un contrôleur (16) associé au moteur électrique (19, 20, 21) pour l'attaque du moteur électrique (19, 20, 21), et comprenant une unité de commande de machine (1) qui est reliée en termes de données au module de commande (5, 6, 7) de ladite au moins une chaîne d'entraînement (2, 3, 4), au moins une première ligne de bus de données (8) étant prévue pour relier l'unité de commande de machine (1) au module de commande (5, 6, 7) et ladite au moins une chaîne d'entraînement (2, 3, 4) présentant une ligne de bus de données supplémentaire (10, 11, 12) par laquelle le module de commande (5, 6, 7) de la chaîne d'entraînement (2, 3, 4) est relié aux contrôleurs (16, 17, 18) des entraînements (201, 202, 212, 301, 302, 312, 401, 402, 412), **caractérisé en ce qu'**un ensemble de détection (25) est associé aux lignes d'enroulement de moteur (22, 23, 24) de chaque entraînement (201, 202, 212, 301, 302, 312, 401, 402, 412), lequel est conçu pour détecter et évaluer un sens de rotation et un angle de rotation d'un rotor du moteur électrique (19, 20, 21), qu'aux lignes d'enroulement de moteur (22, 23, 24) est en outre associé un circuit d'attaque (36) qui comprend l'onduleur et qui est conçu pour entraîner sélectivement le moteur électrique (19, 20, 21) et pour appliquer un couple de maintien s'opposant à la rotation du moteur électrique (19, 20, 21) à l'arrêt, et que le contrôleur (16, 17, 18) du moteur électrique (19, 20, 21) et/ou le module de commande (5, 6, 7) des chaînes d'entraînement (2, 3, 4) et/ou l'unité de commande de machine supérieure (1) sont conçus pour coopérer avec l'ensemble de détection (25) et le circuit d'attaque (36) de telle sorte qu'en fonction du sens de rotation et de l'angle de rotation, il se produit une dureté de rotation locale de telle sorte que, au cours d'une révolution d'arbre, des zones angulaires de rotation dure et de rotation facile sont formées.

2. Dispositif d'attaque selon la revendication 1, **caractérisé en ce que** le circuit d'attaque est conçu comme un circuit de court-circuitage (36) de telle sorte qu'au moins certaines des lignes d'enroulement de moteur (22, 23, 24) peuvent être court-circuitées sélectivement, le circuit de court-circuitage (36) comprenant au moins un élément de commutation, ledit au moins un élément de commutation étant réalisé de préférence sous la forme d'un transistor (37, 38, 39, 40, 41, 42).

3. Dispositif d'attaque selon la revendication 2, **caractérisé en ce que** le circuit de court-circuitage (36) comprend au moins six éléments de commutation, au moins deux éléments de commutation étant prévus par ligne d'enroulement de moteur (22, 23, 24).

4. Dispositif d'attaque selon la revendication 3, **caractérisé en ce que** les éléments de commutation présentent une entrée de commande et qu'une ligne de commande (43, 44, 45, 46, 47, 48) est menée de l'entrée de commande de l'élément de commutation au contrôleur (16, 17, 18) du moteur électrique (19, 20, 21).

5. Dispositif d'attaque selon l'une des revendications 1 à 4, **caractérisé en ce que** l'ensemble de détection est réalisé sous la forme d'un circuit de détection (25), le circuit de détection (25) comprenant au moins deux lignes de capteur (26, 27) qui sont prévues entre au moins deux lignes d'enroulement de moteur (22, 23, 24) et présentent chacune un élément de blocage de courant, l'élément de blocage de courant étant de préférence réalisé sous la forme d'une diode (28, 29).

6. Dispositif d'attaque selon la revendication 5, **caractérisé en ce que** lesdites au moins deux lignes de capteur (26, 27) présentent chacune une pluralité de résistances (30, 31, 32, 33) connectées en série, de préférence deux résistances (30, 31, 32, 33) par ligne de capteur (26, 27) étant connectées en série.

7. Dispositif d'attaque selon la revendication 6, **caractérisé en ce que**, dans le circuit de détection (25), une prise de signal est prévue entre deux résistances adjacentes (30, 31, 32, 33) d'une ligne de capteur (26, 27) et qu'une ligne de signal (34, 35) est menée de la prise de signal au contrôleur (16, 17, 18) du moteur électrique (19, 20, 21).

8. Dispositif d'attaque selon la revendication 7, **caractérisé en ce que** la ligne de signal (34, 35) est menée vers une entrée d'un convertisseur analogique-numérique du contrôleur (16, 17, 18).

9. Dispositif d'attaque selon l'une des revendications 1 à 8, **caractérisé en ce qu'**il est prévu au total trois chaînes d'entraînement (2, 3, 4) comportant chacun douze entraînements (201, 202, 212, 301, 302, 312, 401, 402, 412), chaque chaîne d'entraînement (2, 3, 4) présentant son propre module de commande (5, 6, 7) et sa propre ligne de bus de données supplémentaire (10, 11, 12) pour relier le module de commande (5, 6, 7) de la chaîne d'entraînement (2, 3, 4) aux entraînements associés (201, 202, 212, 301, 302, 312, 401, 402, 412) de la chaîne d'entraînement (2, 3, 4).

10. Dispositif d'attaque selon l'une des revendications 1 à 9, **caractérisé en ce qu'**une pluralité de modules de commande (5, 6, 7) sont reliés entre eux en termes de données par une deuxième ligne de bus de données (9), l'unité de commande de machine (1) n'étant pas connectée à la deuxième ligne de bus de données (9).
